# EUROPEAN PATENT APPLICATION

(11) **EP 3 550 177 A1**
(43) Date of publication of application: **09.10.2019**
(21) Application number: 17876719.0
(22) Date of filing: 29.11.2017
(51) Int. Cl.: F16H 1/28, B60R 11/02

(54) **PLANETARY SPEED REDUCER WITH SMALL TOOTH DIFFERENCE, IN-VEHICLE DISPLAY, AND VEHICLE**

(30) Priority: 30.11.2016 CN 201611089480
(71) Applicant: BYD Company Limited, Shenzhen, Guangdong 518118 (CN)
(72) Inventor: ZHANG, Xiaoru, Shenzhen Guangdong 518118 (CN); XU, Xiaofang, Shenzhen Guangdong 518118 (CN); BAI, Sheng, Shenzhen Guangdong 518118 (CN)
(74) Representative: m patent group
(86) International application number: PCT/CN2017/113546
(87) International publication number: WO 2018/099392

(57) **Abstract**

The present disclosure relates to a planetary reducer with small tooth difference, an in-vehicle display screen device, and a vehicle. The reducer includes a reducer housing, an input shaft (220), an inner gear ring (230), a cycloidal gear (240), an output flange (270), and a plurality of pin shafts (260). The inner gear ring is fixed to the reducer housing. An eccentric cam (221) is provided on the input shaft. The cycloidal gear is mounted on the eccentric cam through an arm bearing (285) and meshes with the inner gear ring. The cycloidal gear is provided with a plurality of pin holes (241) distributed in the circumferential direction thereof. The reducer further includes a support frame (250) having a central shaft hole (251). The input shaft passes through the central shaft hole. Each pin shaft passes through the corresponding pin hole and both ends are connected to the output flange and the support frame respectively. By supporting both ends of the pin shaft, the bending strength and rigidity of the pin shaft are improved, and the pin shafts can always maintain uniform spacing therebetween, thereby realizing the load sharing of each pin shaft and improving the overall carrying capacity of the reducer.

## Description

### CROSS-REFERENCE TO RELATED APPLICATIONS

This application claims priority to and benefits of Chinese Patent Application No. 201611089480.9, filed with the State Intellectual Property Office of P. R. China on November 30, 2016. The entire content of the above-referenced applications is incorporated herein by reference.

### FIELD

The present disclosure relates to the field of reducers, and in particular, to a planetary reducer with small tooth difference, and an in-vehicle display screen device having the reducer.

### BACKGROUND

Compared with a conventional reducer, a planetary reducer with small tooth difference has advantages of compact structure, large transmission ratio and the like. However, in the planetary reducer with small tooth difference in the prior art, since pin shafts have a cantilever structure (one end is connected to an output flange and the other end is a cantilever end), structural rigidity thereof is small, the pin shafts are easy to deform, it is difficult to maintain uniform spacing therebetween, it is impossible to realize load sharing of each pin shaft, and an overall carrying capacity of the reducer is reduced.

### SUMMARY

The present disclosure is provided with a planetary reducer with small tooth difference, which can prevent a pin shaft from deforming.

The present disclosure provides a planetary reducer with small tooth difference, including a reducer housing, an input shaft, a cycloidal gear, an output flange, and a plurality of pin shafts. The reducer housing includes an inner gear ring and the reducer housing is sleeved over the input shaft. An eccentric cam is provided on the input shaft. The cycloidal gear is mounted on the eccentric cam through an arm bearing and meshes with the inner gear ring. The cycloidal gear is provided with a plurality of pin holes distributed in a circumferential direction thereof. The reducer further includes a support frame. The support frame has a central shaft hole. The input shaft passes through the central shaft hole. Each pin shaft passes through the corresponding pin hole and both ends are connected to the output flange and the support frame respectively.

In the planetary reducer with small tooth difference of the present disclosure, by adding the support frame, both ends of the pin shaft can be supported, so that the pin shaft is of a simple support structure, the bending strength and rigidity of the pin shaft are greatly improved, and the pin shafts can always maintain uniform spacing therebetween, thereby realizing the load sharing of each pin shaft, improving the overall carrying capacity of the reducer, and prolonging the service life of the reducer. Moreover, during the operation of the reducer, the pin shaft, gear teeth and the arm bearing are simultaneously stressed, so that an entire transmission system has better carrying capacity, the stress is more reasonable, and the system stability is better.

The present disclosure also provides an in-vehicle display screen device, including a display screen, a motor and the reducer as described above. The motor drives the display screen to rotate through the reducer, such that the display screen can be switched between a landscape state and a portrait state.

Alternatively, the in-vehicle display screen device further includes a rear screen bracket fixed to the back of the display screen, the output flange of the reducer being connected to the rear screen bracket.

The present disclosure also provides a vehicle, including the in-vehicle display screen device as described above.

Other features and advantages of the present disclosure are described in detail in the Detailed Description part below.

### BRIEF DESCRIPTION OF THE DRAWINGS

The accompanying drawings are used to provide a further understanding of the present disclosure, constitute a part of this specification, and are used, together with the following specific implementations, to explain the present disclosure, but do not constitute limitations to the present disclosure. In the accompanying drawings:
FIG. 1 is a top view of an in-vehicle display screen device according to an embodiment of the present disclosure;
FIG. 2 is a front view of an in-vehicle display screen device according to an embodiment of the present disclosure;
FIG. 3 is a sectional view of AA in FIG. 2;
FIG. 4 is an enlarged view of a reducer in FIG. 3;

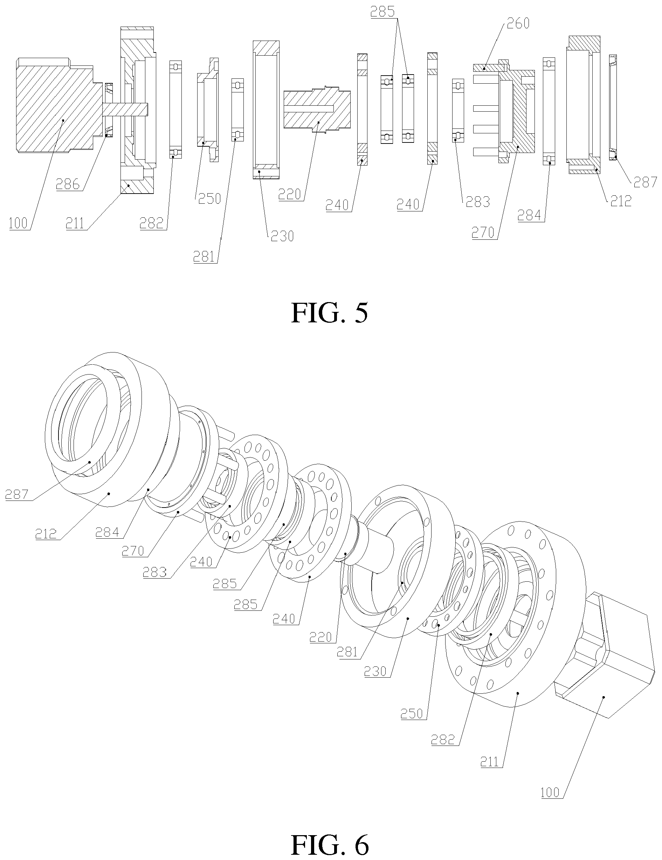

FIG. 5 is an exploded sectional view of an in-vehicle display screen device according to an embodiment of the present disclosure, where a display screen and a rear screen bracket are not shown;
FIG. 6 is a three-dimensional exploded view of an in-vehicle display screen device according to an embodiment of the present disclosure, where a display screen and a rear screen bracket are not shown;
FIG. 7 is a plane view of an input shaft;
FIG. 8 is a plane view of a cycloidal gear;
FIG. 9 is a sectional view of a support frame; and
FIG. 10 is a sectional view of an output flange.

**Description of the reference numerals:**

| | |
|---|---|
| 100 Motor | 200 Reducer |
| 211 Input end cover | 212 Output end cover |
| 220 Input shaft | 221 Eccentric cam |
| 230 Inner gear ring | 240 Cycloidal gear |
| 241 Pin hole | 250 Support frame |
| 251 Central shaft hole | 252 Mounting hole |
| 253 First support frame shoulder | 254 Second support frame shoulder |
| 260 Pin shaft | 270 Output flange |
| 271 Groove | 272 Flange shoulder |
| 281 First support frame bearing | 282 Second support frame bearing |
| 283 First flange bearing | 284 Second flange bearing |
| 285 Cycloidal gear bearing | 286 First oil seal |
| 287 Second oil seal | 288 Bolt |
| 300 Rear screen bracket | 400 Display screen |

### DETAILED DESCRIPTION

Specific implementations of the present disclosure are described in detail below with reference to the accompanying drawings. It should be understood that the specific implementations described herein are merely used to describe and explain the present disclosure rather than limiting the present disclosure.

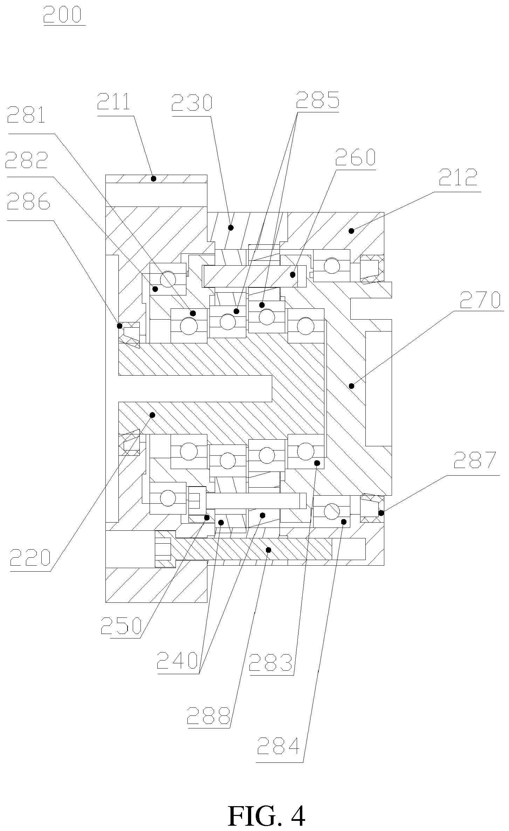

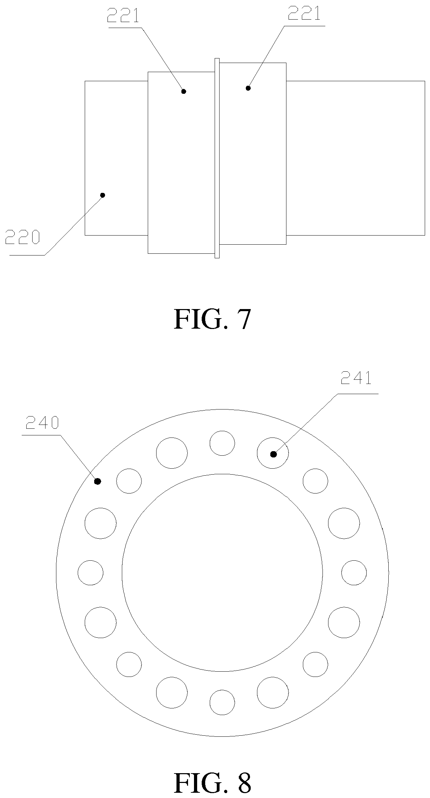

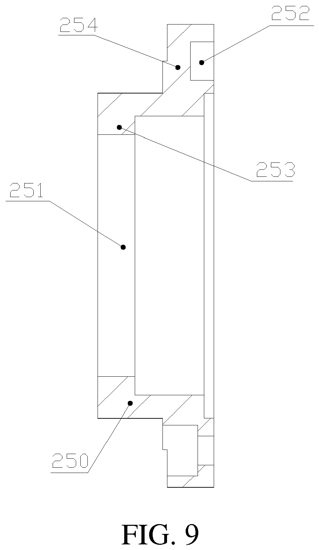

As shown in FIG. 4, according to an aspect of the present disclosure, a planetary reducer 200 with small tooth difference is provided. The reducer 200 includes a reducer housing, an input shaft 220, an inner gear ring 230, a cycloidal gear 240, a support frame 250, an output flange 270, and a plurality of pin shafts 260. The reducer housing is sleeved over the input shaft 220. The support frame 250, the cycloidal gear 240 and the output flange 270 are all provided inside the reducer housing. The reducer housing includes the inner gear ring 230. The support frame 250 has a central shaft hole 251 (as shown in FIG. 9). The input shaft 220 passes through the central shaft hole 251 and an eccentric cam 221 is provided on the input shaft 220. The cycloidal gear 240 is mounted on the eccentric cam 221 through an arm bearing 285 and meshes with the inner gear ring 230. The cycloidal gear 240 is provided with a plurality of pin holes 241 (as shown in FIG. 8) distributed in the circumferential direction thereof. The cycloidal gear 240 is located between the support frame 250 and the output flange 270 in an axial direction of the input shaft 220. Each pin shaft 260 passes through the corresponding pin hole 241 and both ends of each pin shaft 260 are connected to the output flange 270 and the support frame 250 respectively. Each pin shaft 260 may be sleeved with a pin shaft sleeve to be in contact with the pin hole 241. During operation, the input shaft 220 drives the cycloidal gear 240 to rotate by the arm bearing 285, and the cycloidal gear 240 meshes with the fixed inner gear ring 230. Under the driving of the input shaft 220 and the restriction of the inner gear ring 230, the cycloidal gear 240 performs a planar motion along the inner gear ring 230 while performing a rotary motion along its own axis. The cycloidal gear 240 drives the pin shaft 260 to rotate around the central axis of the output flange 270 by a frictional force between a pin hole surface and a pin shaft surface, so that torque after deceleration torque rise is output through the output flange 270, and meanwhile, the support frame 250 also performs a rotary motion under the driving of the pin shaft 260.

In the planetary reducer with small tooth difference of the present disclosure, by adding the support frame 250, both ends of the pin shaft 260 can be supported, so that the pin shaft 260 is of a simple support structure, the bending strength and rigidity of the pin shaft 260 are greatly improved, and the pin shafts can always maintain uniform spacing therebetween, thereby realizing the load sharing of each pin shaft, improving the overall carrying capacity of the reducer, and prolonging the service life of the reducer. Moreover, during the operation of the reducer, the pin shaft 260, gear teeth (including gear teeth on the cycloidal gear 240 and gear teeth on the inner gear ring 250) and the arm bearing 285 are simultaneously stressed, so that the entire transmission system has better carrying capacity, the stress is more reasonable, and the system stability is better.

As shown in FIG. 4 and FIG. 7, the input shaft 220 may have two eccentric cams 221. The two eccentric cams 221 are offset by the same eccentric distance in opposite directions relative to the axis of the output shaft 220 (i.e., the two eccentric cams 221 are misaligned by 180°). The reducer includes two cycloidal gears 240. The two cycloidal gears 240 are mounted on the respective eccentric cams 221 through the arm bearings 285 respectively. In this way, the transmission system can be guaranteed to meet the requirements of static balance and dynamic balance, the need for additional counterweight is avoided, and meanwhile, the input shaft 220 can be prevented from being subjected to additional unbalanced dynamic loads, thereby guaranteeing steady transmission. To prevent friction between the two cycloidal gears 240, a spacer ring (not shown) may be provided between the two cycloidal gears 240.

In the present disclosure, an eccentric distance between the cycloidal gear 240 and the inner gear ring 230 may be consistent with an eccentric distance between the pin hole 241 and the pin shaft 260 on the cycloidal gear 240. Thus, it can be guaranteed that the pin shaft 260 and the pin hole 241 are always tangential throughout the transmission process, thereby guaranteeing a smooth and steady power transmission path.

The reducer housing may include an input end cover 211 and an output end cover 212. To guarantee that the entire wheel train works in a relatively sealed environment and to avoid internal lubricating oil contamination and seepage, as shown in FIG. 4, a first oil seal 286 may be provided between the input end cover 211 and the input shaft 220, and a second oil seal 287 may be provided between the output end cover 212 and the output flange 270.

In the present disclosure, the reducer housing 210 may have various suitable structures. As an embodiment, as shown in FIG. 4, the inner gear ring 230 is provided between the input end cover 211 and the output end cover 212, and two end faces of the inner gear ring 230 are fixed to the input end cover 211 and the output end cover 212 respectively. In this embodiment, the inner gear ring 230 may be used as part of the reducer housing 210, thereby simplifying the structure and reducing the amount of materials used. In other embodiments, the reducer housing 210 may include a main body portion and an input end cover 211 and an output end cover 212 connected to both ends of the main body portion, and the inner gear ring 230 may be fixed inside the main body portion.

The input end cover 211, the inner gear ring 230 and the output end cover 212 may be connected together in any suitable manner. In an embodiment shown by FIG. 4, the input end cover 211, the inner gear ring 230 and the output end cover 212 are respectively provided with a first bolt through hole, a second bolt through hole and a threaded hole, a bolt 288 sequentially passing through the first bolt through hole and the second bolt through hole to be connected to the threaded hole, so that the input end cover 211, the inner gear ring 230 and the output end cover 212 are connected together by the bolt 288.

In an embodiment shown by FIG. 4, the eccentric cam 221 and the input shaft 220 are integrally molded to form an eccentric shaft. In other embodiments, the eccentric cam 221 and the input shaft 220 may also be two components that are separately disposed. The two embodiments both fall within the scope of protection of the present disclosure.

In the present disclosure, the pin shaft 260 may be connected to the support frame 250 by a variety of suitable manners, such as by fasteners. As an embodiment, as shown in FIG. 4 and FIG. 9, the support frame 250 may be provided with a plurality of mounting holes 252 distributed around the central shaft hole 251. One end of each pin shaft 260 is connected to the output flange 270, and the other end is inserted into the corresponding mounting hole 252 in a matching manner.

In the present disclosure, the support frame 250 may be mounted on the input shaft 220 only by a first support frame bearing 281, or may be mounted on an inner wall of the reducer housing only by a second support frame bearing 282. To improve the supporting strength of the support frame 250, as shown in FIG. 4, an inner ring of the support frame 250 is mounted on the input shaft 220 by the first support frame bearing 281, and an outer ring of the support frame 250 is mounted on an inner wall of the input end cover 211 by the second support frame bearing 282. The first support frame bearing 281 can also provide support for the input shaft 220 while providing support for the support frame 250, thereby improving the structural rigidity of the input shaft 220. To make the axial layout of the transmission system more compact, the first support frame bearing 281 may be disposed inside the second support frame bearing 282, that is, the two support frame bearings have overlapping regions in the axial direction of the input shaft 220.

To prevent axial movement of the first support frame bearing 281 and the second support frame bearing 282, as shown in FIG. 4 and FIG. 9, an inner side of the support frame 250 is provided with a first support frame shoulder 253, an outer side of the support frame 250 is provided with a second support frame shoulder 254, a left side of the first support frame bearing 281 abuts against the first support frame shoulder 253, and a right side of the second support frame bearing 282 abuts against the second support frame shoulder 254. The mounting hole 252 may be provided on the second support frame shoulder 254. The second support frame shoulder 254 is closer to the cycloidal gear 240 than the first support frame shoulder 253, such that the two support frame bearings have overlapping regions in the axial direction of the input shaft 220.

Similarly, the output flange 270 may be mounted on the input shaft 220 only by a first flange bearing 283, or may be mounted on the inner wall of the reducer housing only by a second flange bearing 284. To improve the supporting strength of the output flange 270, as shown in FIG. 4, an inner ring of the output flange 270 is mounted on the input shaft 220 by the first flange bearing 283, and an outer ring of the output flange 270 is mounted on an inner wall of the output end cover 212 by the second flange bearing 284. The first flange bearing 283 can also provide support for the input shaft 220 while providing support for the output flange 270, thereby further improving the structural rigidity of the input shaft 220. To make the axial layout of the transmission system more compact, the first flange bearing 283 may be disposed inside the second flange bearing 284, that is, the two flange bearings have overlapping regions in the axial direction of the input shaft 220.

In this case, as shown in FIG. 4, the support frame 250, the output flange 270 and the input shaft 220 are all of a simple support structure, and the second support frame bearing 282 and the second flange bearing 284 guarantee the supporting rigidity and strength of the entire transmission system while providing support for the support frame 250 and the output flange 270, thereby improving the impact resistance of the transmission system.

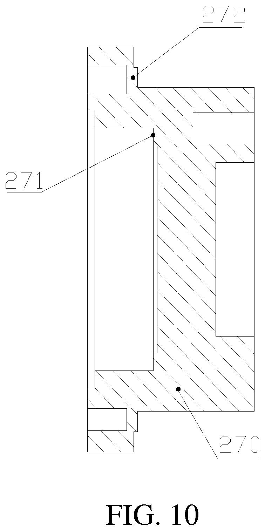

To prevent axial movement of the first flange bearing 283 and the second flange bearing 284 from, as shown in FIG. 4 and FIG. 10, a side of the output flange 270 adjacent to the cycloidal gear 240 is provided with a groove 271, the first flange bearing 283 is fitted in the groove 271 in a matching manner, an outer ring of the output flange 270 is provided with a flange shoulder 272, the second flange bearing 284 abuts against the flange shoulder 272, and the pin shaft 260 is connected to the flange shoulder 272.

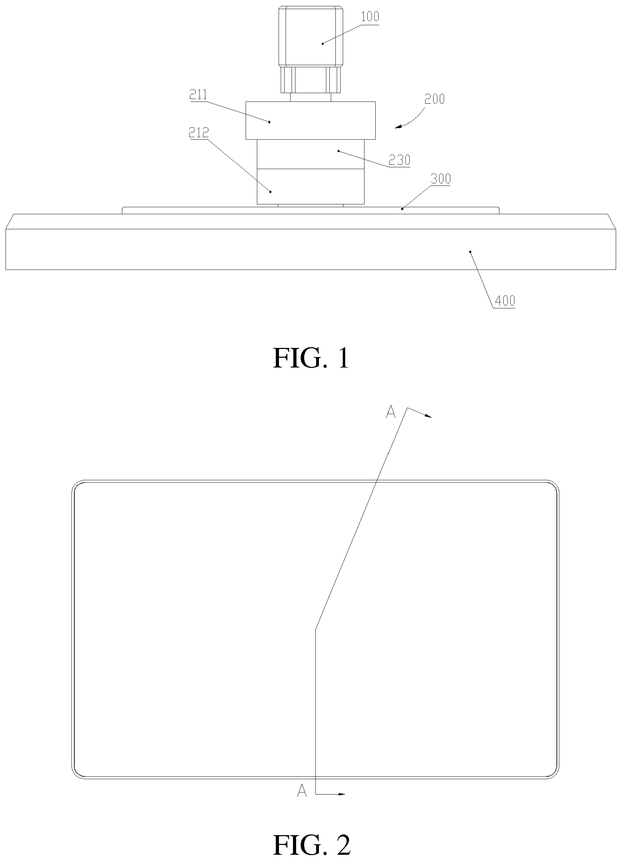

As shown in FIG. 1 to FIG. 3, according to another aspect of the present disclosure, an in-vehicle display screen device is provided. The in-vehicle display screen device includes a display screen 400, a motor 100 and the reducer 200 as described above. The motor 100 is connected to the reducer 200, and the reducer 200 is connected to the display screen 400, so as to drive the display screen 400 to rotate, such that the display screen 400 can be switched between a landscape state and a portrait state.

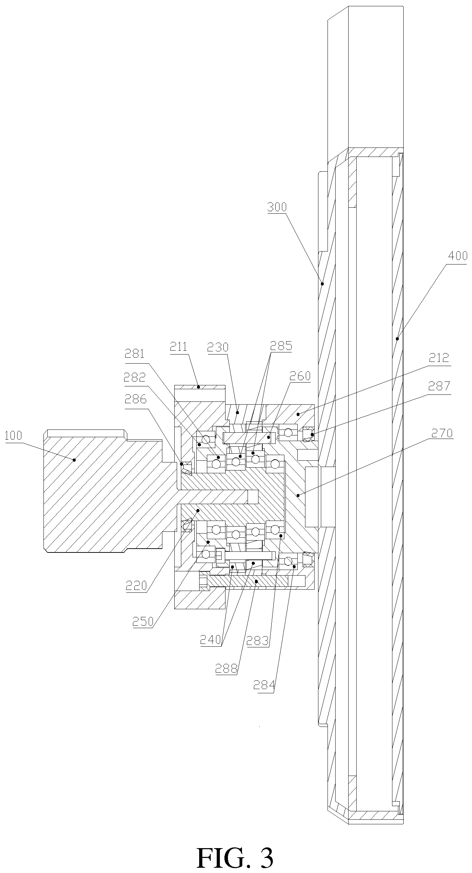

Specifically, as shown in FIG. 3, an output shaft of the motor 100 may be in transmission connection with the input shaft 220 of the reducer 200.

As shown in FIG. 3, the in-vehicle display screen device of the present disclosure may further include a rear screen bracket 300 fixed to the back of the display screen 400. An output flange 270 of the reducer 200 may be connected to the rear screen bracket 300 by fasteners such as bolts.

According to still another aspect of the present disclosure, a vehicle is provided. The vehicle is provided with the in-vehicle display screen device of the present disclosure.

Although preferred implementations of the present disclosure are described in detail above with reference to the accompanying drawings, the present disclosure is not limited to specific details in the foregoing implementations. Various simple variations can be made to the technical solutions of the present disclosure within the scope of the technical idea of the present invention, and such simple variations all fall within the protection scope of the present disclosure.

It should be further noted that the specific technical features described in the foregoing specific implementations can be combined in any appropriate manner provided that no conflict occurs. To avoid unnecessary repetition, various possible combination manners are not further described in the disclosure.

In addition, various different implementations of the present disclosure may alternatively be combined randomly. Such combinations should also be considered as the content disclosed in the present disclosure provided that these combinations do not depart from the concept of the present disclosure.

## Claims

1. A planetary reducer with small tooth difference, comprising: a reducer housing, an input shaft (220), a cycloidal gear (240), an output flange (270), and a plurality of pin shafts (260);
wherein the reducer housing comprises an inner gear ring (230) and the reducer housing is sleeved over the input shaft (220);
an eccentric cam (221) is disposed on the input shaft (220);
the cycloidal gear (240) is mounted on the eccentric cam (221) through an arm bearing (285) and meshes with the inner gear ring (230);
the cycloidal gear (240) is provided with a plurality of pin holes (241) distributed in a circumferential direction thereof;
the reducer further comprises a support frame (250), the support frame (250) having a central shaft hole (251);
the input shaft (220) passes through the central shaft hole (251); and
each pin shaft (260) passes through the corresponding pin hole (241) and both ends of each pin shaft (260) are connected to the output flange (270) and the support frame (250) respectively.

2. The reducer according to claim 1, wherein the support frame (250) is provided with a plurality of mounting holes (252) distributed around the central shaft hole (251), each pin shaft (260) being inserted into the corresponding mounting hole (252) in a matching manner.

3. The reducer according to claim 1 or 2, wherein the support frame (250) is mounted on the input shaft (220) through a first support frame bearing (281).

4. The reducer according to any one of claims 1 to 3, wherein the support frame (250) is mounted on the reducer housing through a second support frame bearing (282).

5. The reducer according to claim 4, wherein an inner ring of the support frame (250) is provided with a first support frame shoulder (253), an outer ring of the support frame (250) is provided with a second support frame shoulder (254), the first support frame bearing (281) abuts against the first support frame shoulder (253), the second support frame bearing (282) abuts against the second support frame shoulder (254), and the first support frame bearing (281) and the second support frame bearing (282) have overlapping regions in an axial direction of the input shaft (220).

6. The reducer according to any one of claims 1 to 5, wherein the output flange (270) is mounted on the input shaft (220) through a first flange bearing (283).

7. The reducer according to claim 6, wherein the output flange (270) is mounted in the reducer housing through a second flange bearing (284).

8. The reducer according to claim 7, wherein a side of the output flange (270) adjacent to the cycloidal gear (240) is provided with a groove (271), the first flange bearing (283) is fitted in the groove (271) in a matching manner, an outer ring of the output flange (270) is provided with a flange shoulder (272), the second flange bearing (284) abuts against the flange shoulder (272), and the first flange bearing (283) and the second flange bearing (284) have overlapping regions in the axial direction of the input shaft (220).

9. The reducer according to any one of claims 1 to 8, wherein the reducer housing comprises an input end cover (211) and an output end cover (212), a first oil seal (286) is disposed between the input end cover (211) and the input shaft (220), and a second oil seal (287) is disposed between the output end cover (212) and the output flange (270).

10. The reducer according to claim 9, wherein the inner gear ring (230) is disposed between the input end cover (211) and the output end cover (212), and two end faces of the inner gear ring (230) are fixed to the input end cover (211) and the output end cover (212) respectively.

11. The reducer according to claim 10, wherein the input end cover (211), the inner gear ring (230) and the output end cover (212) are respectively provided with a first bolt through hole, a second bolt through hole and a threaded hole, a bolt (288) sequentially passing through the first bolt through hole and the second bolt through hole to be connected to the threaded hole.

12. The reducer according to any one of claims 1 to 11, wherein the input shaft (220) has two eccentric cams (221), the two eccentric cams (221) are offset by the same eccentric distance in opposite directions relative to the axis of the output shaft (220), the reducer comprises the two cycloidal gears (240), and the two cycloidal gears (240) are mounted on the respective eccentric cams (221) through the arm bearings (285) respectively.

13. An in-vehicle display screen device, comprising a display screen (400), a motor (100) and the reducer (200) according to any one of claims 1 to 12, the motor (100) driving the display screen (400) to rotate through the reducer (200), such that the display screen (400) can be switched between a landscape state and a portrait state.

14. The in-vehicle display screen device according to claim 13, further comprising a rear screen bracket (300) fixed to the back of the display screen (400), an output flange (270) of the reducer (200) being connected to the rear screen bracket (300).

15. A vehicle, comprising the in-vehicle display screen device according to claim 13 or 14.
